# FASCICULE DE BREVET EUROPEEN

(11) **EP 2 480 369 B1**
(45) Date de publication et mention de la délivrance du brevet: **10.06.2015**
(21) Numéro de dépôt: 10760985.1
(22) Date de dépôt: 23.09.2010
(51) Int. Cl.: B23K 20/02, F28F 3/12

(54) **PROCEDE DE FABRICATION D'UN MODULE A ZONE CREUSE PAR COMPRESSION ISOSTATIQUE A CHAUD**
VERFAHREN ZUR HERSTELLUNG EINES MODULS MIT EINEM HOHLRAUM DURCH HEISSISOSTATISCHES PRESSEN
METHOD FOR MANUFACTURING A MODULE HAVING A HOLLOW SPACE BY HOT ISOSTATIC PRESSURE BONDING

(30) Priorité: 25.09.2009 FR 0956655
(43) Date de publication de la demande: 01.08.2012
(73) Titulaire: Commissariat à l'Énergie Atomique et aux Énergies Alternatives, 75015 Paris (FR)
(72) Inventeur: COUTURIER, Raphaël, F-38360 Sassenage (FR); BERNARD, Charlotte, F-74130 Contamine Sur Arve (FR); REYTIER, Magali, F-38250 VILLARD DE LANS (FR); RIGAL, Emmanuel, F-38950 St Martin Le Vinoux (FR)
(74) Mandataire: Ilgart, Jean-Christophe
(86) Numéro de dépôt international: PCT/EP2010/064050
(87) Numéro de publication internationale: WO 2011/036207

(56) Documents cités:
- FR-A1- 2 879 489
- GB-A- 2 269 556
- NORAJITRA P ET AL: "HIP experiments on the first wall and cooling plate specimens for the EU HCPB blanket", JOURNAL OF NUCLEAR MATERIALS, ELSEVIER BV, NL LNKD- DOI:10.1016/S0022-3115(02)01130-3, vol. 307-311, 1 décembre 2002 (2002-12-01) , pages 1558-1562, XP004400621, ISSN: 0022-3115 cité dans la demande

## Description

L'invention se rapporte de façon générale au domaine de la fabrication, par soudage par diffusion mis en oeuvre par compression isostatique à chaud, de modules à zone creuse.

En particulier, l'invention se rapporte à la fabrication de modules dont la zone creuse prend la forme d'un ou d'une pluralité de canaux, de préférence destinés à la circulation de fluide.

De nombreuses applications sont envisageables pour ce module, comme les échangeurs de chaleur, et préférentiellement les échangeurs dits compacts à plaque, pour lesquels les échanges thermiques obtenus sont très satisfaisants, en raison de l'important rapport entre les surfaces d'échange et le volume de l'échangeur. Par exemple, il peut s'agir d'un système d'échangeur thermique comprenant un module ou un empilement de modules formant en alternance, selon une direction d'empilement des plaques, une première zone de circulation fluidique et une seconde zone de circulation fluidique, et conçus de manière à ce qu'il se produise une réaction chimique, éventuellement catalytique, dans au moins l'une de ces zones de circulation fluidique. Ainsi, en raison de la réaction chimique rencontrée au sein d'au moins l'une de ces zones, de tels échangeurs sont également appelés réacteurs. De manière plus générale, de tels échangeurs de chaleur sont dénommés échangeur/réacteur.

Il est noté que plusieurs utilisations peuvent être envisagées pour ce type de système d'échangeur, par exemple la production de produits chimiques ou pharmaceutiques.

D'autres applications sont également envisageables pour le module creux, dans les appareils à pression refroidis, les absorbeurs thermiques, les récupérateurs de chaleur, et, de façon plus générale, dans tous les dispositifs comportant des canaux internes de circulation de fluide.

### ETAT DE LA TECHNIQUE ANTERIEURE

De l'art antérieur, on connait la fabrication d'un module creux à partir de deux plaques rainurées, en appui l'une contre l'autre afin de définir conjointement des cavités dans lesquelles sont insérés des tubes dont la géométrie correspond à celle des canaux de circulation désirés. Dans ce cas de figure, les surfaces à assembler par diffusion sont tout d'abord nettoyées, les pièces empilées, puis la périphérie des deux plaques est rendue étanche par soudage ou en insérant ces plaques dans une enveloppe rendue étanche également par soudage. De même, la périphérie des extrémités des tubes est rendue étanche par soudage avec ces deux mêmes plaques ou avec l'enveloppe, également dénommée conteneur.

Après un dégazage classique de l'ensemble ainsi formé, celui-ci est soumis à un cycle de compression isostatique à chaud, durant lequel le gaz de pressurisation ne peut pas pénétrer dans les interfaces entre les éléments de l'ensemble, ceux-ci pouvant alors se souder convenablement les uns aux autres, par diffusion. En revanche, le gaz de pressurisation pénètre à l'intérieur des tubes, de sorte qu'ils sont soumis à la même pression que celle des surfaces extérieures de l'ensemble. Il ne se produit de ce fait aucun écrasement des tubes, qui conservent leur géométrie initiale.

Néanmoins, dans certaines réalisations, la forme des canaux est telle qu'elle est irréalisable à partir de tubes, notamment lorsqu'elle comporte des coudes trop prononcés pour pouvoir être obtenus par cintrage de tubes droits.

A cet égard, il est noté que l'assemblage par soudage diffusion en compression isostatique à chaud de plaques rainurées, sans tubes interposés entre celles-ci, n'est possible qu'au prix d'une dégradation importante de la structure. En effet, si on ne bouche pas de façon étanche les entrées et sorties des canaux, le gaz de pressurisation pénètre entre les plaques rainurées et interdit leur soudage. A l'inverse, si on bouche de façon étanche les entrées et sorties des canaux, ceux-ci sont écrasés par la pression, ce qui conduit à une perte inacceptable de précision dimensionnelle des canaux, voire à une disparition de ces derniers. Dans un tel cas, une diminution de la pression engendrerait, certes, un plus faible écrasement des canaux, mais s'accompagnerait également d'une réduction de la résistance des jonctions soudées.

Une autre solution technique pour éviter l'écrasement des canaux consiste à remplir les rainures avec des noyaux réalisés dans un matériau susceptible d'être éliminé après l'assemblage, par dissolution chimique ou par un autre moyen, tel que cela est décrit dans le document JP-A-2006 263746. Cependant, dans la pratique, la définition du matériau de remplissage et son élimination s'avèrent très difficiles.

Encore un autre procédé de fabrication est connu du document FR-A-2 879 489. Il consiste à usiner des rainures préfigurant les canaux dans une plaque, à étanchéifier le sommet de ces rainures en y rapportant par soudage des lames minces, puis à assembler par soudage diffusion en compression isostatique à chaud, sur la plaque rainurée, un second élément en forme de couvercle recouvrant les lames minces. Cette solution présente plusieurs inconvénients, parmi lesquels un coût élevé, la difficulté de souder les lames minces lorsque les canaux ne sont pas droits, la difficulté de contrôler et garantir l'étanchéité de toutes les soudures des lames pour une structure comprenant de multiples canaux ou de grandes longueurs de canaux, ou encore l'impossibilité de construire des canaux avec une largeur de canal non régulière sur la hauteur du canal, dans l'optique de la formation de canaux dits « 3D ».

Enfin, un autre procédé de fabrication est connu du document intitulé « HIP experiments on the first wall and cooling plate spécimens for the EU HCPB blanket », P. Norajitra et al., Journal of Nuclear Materials 307-311 (2002). Il y est décrit un principe consistant à assembler des pièces élémentaires, par soudage diffusion en compression isostatique à chaud, en deux étapes. Tout ou partie des pièces élémentaires permettent de reconstituer, en les juxtaposant, les canaux désirés. Ces pièces élémentaires sont insérées dans un conteneur étanche pour former un ensemble qui est ensuite dégazé puis obturé. Alternativement, la périphérie des pièces élémentaires est soudée de façon étanche, et les canaux obturés, toujours de manière à former une enveloppe étanche renfermant la zone creuse.

Lors de la première étape de soudage par diffusion, les conditions de température et de pression de la compression isostatique à chaud, ainsi que la durée de l'étape, sont retenues d'une part de manière à obtenir un soudage des pièces rendant leurs interfaces étanches, et d'autre part de sorte que les éventuelles déformations des canaux restent négligeables.

Après cette première étape, l'ensemble est percé en regard des canaux, de façon à y laisser pénétrer l'air. L'étanchéité de la zone creuse est alors rompue. Il s'ensuit une seconde étape de soudage par diffusion, réalisée à plus forte pression de façon à garantir l'obtention d'un soudage diffusion de bonne qualité entre les pièces élémentaires. Durant cette deuxième étape, le gaz de pressurisation pénètre dans les canaux, contrairement à la première étape de soudage, ce qui permet d'éviter l'écrasement des canaux, et de leur faire conserver une géométrie acceptable.

Cette solution présente de nombreux inconvénients, parmi lesquels la nécessité de passer deux fois l'ensemble dans une enceinte de compression isostatique à chaud, avec mise à l'air entre les deux étapes pour percer l'ensemble au droit des canaux. Cela engendre des temps et des coûts de fabrication élevés. De plus, les risques d'erreur lors de l'opération de perçage sont réels, puisqu'il s'agit de percer précisément un composant qui peut être de grande taille, et qui peut avoir subi des déformations lors de la première étape rendant la localisation des canaux délicate.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet un procédé de fabrication d'un module à zone creuse par compression isostatique à chaud, comprenant :
- une étape de réalisation d'un ensemble comprenant des éléments superposés définissant la zone creuse, ledit ensemble étant réalisé de manière à former une enveloppe étanche renfermant ladite zone creuse, comportant au moins un organe d'obturation fusible séparant ladite zone creuse de l'extérieur de l'ensemble ; suivie
- d'une étape de compression isostatique à chaud dudit ensemble, réalisée de manière à obtenir un soudage par diffusion de ses éléments, cette étape étant réalisée en faisant évoluer les conditions de température et de pression de sorte que celles-ci provoquent, au cours de cette étape, une rupture dudit organe d'obturation fusible permettant au gaz de pressurisation de pénétrer dans ladite zone creuse.

Ainsi, l'étape de compression isostatique à chaud comprend une première phase précédant la rupture de l'organe d'obturation, phase durant laquelle les éléments de l'ensemble commencent à se souder aux interfaces, par diffusion, sans que le gaz de pressurisation ne puisse pénétrer dans la zone creuse et perturber ce soudage aux interfaces. Le soudage observé durant cette première phase est suffisant pour obtenir l'étanchéité aux interfaces, mais présente une résistance mécanique faible, prévue pour être consolidée par la mise en oeuvre d'une seconde phase de compression ultérieure. Avant l'initiation de cette seconde phase de compression, les conditions de température et de pression appliquées provoquent la rupture de l'organe d'obturation, qui se traduit par la pénétration du gaz de pressurisation dans la zone creuse, contrairement à la première phase. Cela permet d'appliquer une pression beaucoup importante que durant la première phase, propice à l'obtention d'une résistance mécanique forte au niveau des interfaces soudées par diffusion, sans provoquer l'écrasement de la zone creuse qui peut ainsi conserver la géométrie désirée. Cela s'explique par le fait que l'intérieur de la zone creuse est soumis à la même pression que celle s'appliquant sur les surfaces extérieures de l'ensemble subissant la compression.

Ce principe spécifique à la présente invention est avantageux en ce qu'il procure une simplicité de fabrication, se traduisant par un gain en termes de temps et de coûts de fabrication. Ce gain résulte surtout de la rupture à caractère automatique de l'organe d'obturation durant une même étape de compression isostatique à chaud, ne nécessitant pas d'extraire l'ensemble hors de l'enceinte de pressurisation pour la percer puis la réintroduire dans l'enceinte, comme cela était le cas dans l'art antérieur intitulé « *HIP experiments on the first wall and cooling plate spécimens for the EU HCPB blanket ».*

De plus, la fiabilité du procédé est satisfaisante, puisque la rupture de l'organe d'obturation garantit une communication entre l'extérieur de l'ensemble et la zone creuse, contrairement aux opérations de perçage décrites dans l'art antérieur qui vient d'être mentionné.

L'ensemble peut comporter un ou plusieurs organes d'obturation fusibles, selon les besoins rencontrés. A cet égard, il est noté que plusieurs organes peuvent être superposés de manière à créer, après leur rupture, une même voie de communication entre l'extérieur de l'ensemble et la zone creuse.

En outre, l'invention permet une grande liberté de forme de la zone creuse, prenant de préférence la forme de canaux, notamment si ceux-ci sont réalisés par découpe laser dans une tôle. La forme complexe des canaux obtenus, par exemple des canaux « 3D », conduit avantageusement à l'obtention d'un module compact et très performant thermiquement lorsqu'il est utilisé au sein d'un échangeur, et très performant en mélange de réactifs chimiques lorsqu'il est utilisé au sein d'un échangeur/réacteur.

Enfin, il ne nécessite pas de brasure pour assembler les éléments, donc ne présente pas de problèmes en cas d'utilisation de fluides corrosifs.

De préférence, lesdites conditions de température et de pression sont retenues de manière à réaliser une première phase de compression à une température T1, une pression P1, pendant une durée D1, puis à réaliser une seconde phase de compression à une température T2, une pression P2 supérieure à la pression P1, pendant une durée D2, la rupture dudit organe d'obturation fusible étant provoquée entre les première et seconde phases de compression. Par pression P1 etP2, on entend une pression sensiblement constante sur les durées D1 et D2.

Ainsi, la première phase de compression est réalisée à une pression plus faible permettant néanmoins d'obtenir l'étanchéité aux interfaces des éléments de l'ensemble, sans provoquer d'écrasement de la zone creuse. La pression plus élevée mise en oeuvre lors de la seconde phase permet quant à elle d'obtenir des jonctions mécaniques consolidées aux interfaces. La rupture de l'organe d'obturation s'effectue par conséquent durant la montée en pression. En fonction de la nature de cet élément d'obturation, cette rupture s'effectue soit sous l'effet de la pression, par éclatement, soit sous l'effet de la température, par liquéfaction ou éclatement lorsque l'on approche de la température de fusion. A cet égard, il est noté que la température de l'organe a également une influence sur l'instant de son éclatement par pression, de même que la pression à une influence sur l'instant auquel un organe se liquéfiant va rompre.

Quoi qu'il en soit, lorsque l'organe est conçu pour se rompre sous l'effet de la température, par liquéfaction, la température T2 est fixée à une valeur supérieure à la température T1, et le point de fusion de l'organe d'obturation compris entre T1 et T2. En outre, la température T2 peut être fixée à une valeur supérieure à la température T1 même lorsque l'organe d'obturation est prévu pour se rompre sous l'effet de la pression, par éclatement, et ce dans le but de favoriser le soudage par diffusion. T1 et T2 peuvent néanmoins être identiques ou proches, sans sortir du cadre de l'invention.

De préférence, et en particulier dans le cas où l'alliage utilisé est à base de fer, de nickel ou de cuivre, ou un acier inoxydable, ou encore un alliage à base de titane, ladite pression P1 est comprise entre 50 et 200 bar, par exemple proche de 150 bar, et la pression P2 comprise entre 1000 et 2000 bar, par exemple proche de 1500 bar. Il est clair que les pressions P1 et P2 peuvent varier durant D1 et D2 dans les limites précitées, mais sont de préférences sensiblement constantes.

De préférence, lesdites températures T1 et T2 sont chacune comprise entre 900 et 1200°C.

De préférence, comme évoqué ci-dessus, l'organe d'obturation forme un thermofusible ou un fusible mécanique. Dans le premier cas, la rupture du fusible est obtenue lorsqu'il devient fluide sous l'effet de la chaleur, alors que dans le second, elle est obtenue en se brisant, sous l'effet de la pression. Dans chacun des cas, le fusible rompu ne remplit plus sa fonction d'obturation et autorise de ce fait la communication fluidique entre la zone creuse et l'extérieur de l'ensemble.

Par exemple, ledit organe d'obturation prend la forme d'une membrane d'épaisseur moyenne comprise entre 0,3 et 0,5 mm.

De préférence, ledit organe d'obturation fait partie intégrante de l'un desdits éléments de l'ensemble, ou bien est rapporté sur l'un de ces éléments, par exemple par soudage.

De préférence, ladite zone creuse prend la forme d'un ou d'une pluralité de canaux de circulation de fluide.

De préférence, ledit module est prévu pour équiper un système d'échangeur de chaleur, même si toutes les applications mentionnées ci-dessus sont envisageables, sans sortir du cadre de l'invention.

De préférence, ledit module prend la forme d'une plaque, de même que chacun desdits éléments constitutifs de l'ensemble.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en perspective d'un module de circulation fluidique obtenu suite à la mise en oeuvre du procédé selon un mode de réalisation préféré de la présente invention ;
- la figure 2 représente une vue éclatée en perspective de l'ensemble destiné à former ledit module de la figure 1, avant son traitement ;
- la figure 3 représente une vue non-éclatée en perspective de l'ensemble montré sur la figure 2 ;
- la figure 4 représente une partie de l'ensemble montré sur les figures 2 et 3 ;
- la figure 5 est une vue en coupe prise le long de la ligne V-V de la figure 4 ;
- la figure 6 est un graphique montrant l'évolution des conditions de température et de pression appliquées durant l'étape de compression isostatique à chaud de l'ensemble ;
- la figure 7 représente une vue analogue à celle de la figure 5, après rupture de l'organe d'obturation fusible ; et
- les figures 8 et 9 montrent des alternatives de réalisations pour l'organe d'obturation fusible.

### EXPOSÉ DÉTAILLÉ DE MODES DE RÉALISATION PRÉFÉRÉS

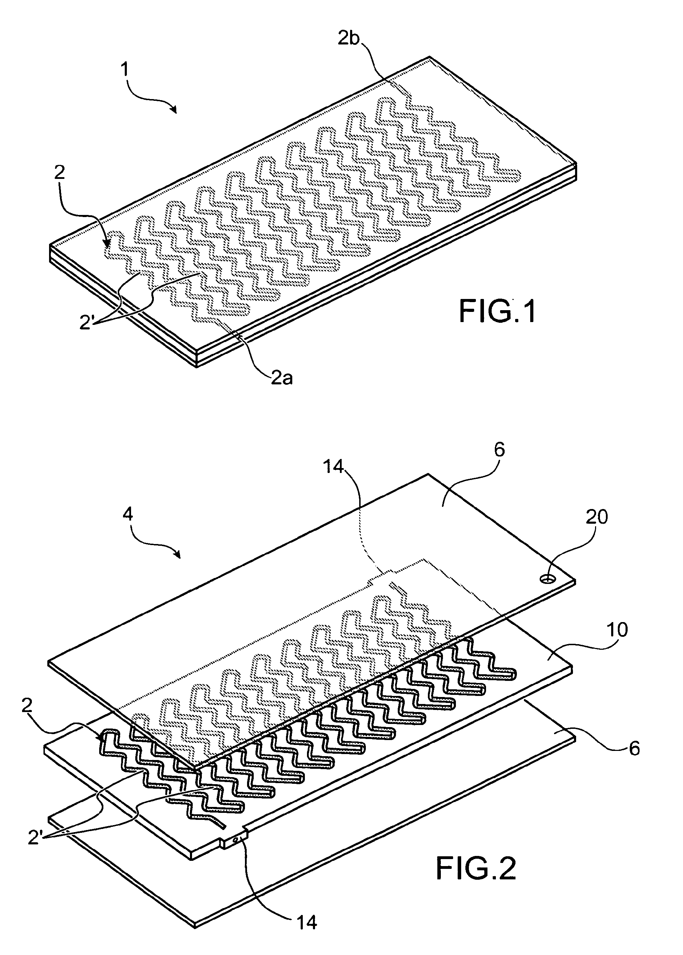

En référence à la figure 1, on peut voir un module 1 pour système d'échangeur de chaleur, de préférence du type échangeur/réacteur, par exemple prévu pour la production de produits chimiques ou pharmaceutiques. Par exemple, ce module présente une longueur de l'ordre de 30 cm, une largeur de l'ordre de 10 à 15 cm, et une épaisseur de l'ordre de 1 à 2 cm. Cependant, tout type de dimensionnement est envisageable, et fonction de l'application du système.

Le module 1, dont le procédé de fabrication spécifique à la présente invention sera décrit ci-après, présente une forme sensiblement parallélépipédique, ou de plaque, traversée par un ou une pluralité de canaux 2 de circulation de fluide. Dans l'exemple représenté, il est prévu un unique canal 2 présentant une entrée 2a et une sortie 2b, entre lesquels se trouvent une pluralité de tronçons de canal 2' de préférence parallèles entre-eux. Les tronçons 2' sont raccordés deux à deux au niveau de leurs extrémités en regard. Les tronçons de canal 2' peuvent être sensiblement rectilignes, ou encore adopter toute autre forme réputée appropriée, telle que la forme dite cintrée ou en zigzag, comme cela a été représenté de façon schématique par les pointillés de la figure 1. En outre, la section de ces canaux 2 peut également être adaptée en fonction des besoins rencontrés. A titre d'exemple indicatif, elle peut être carrée, rectangulaire, ou bien encore de forme évolutive afin de créer un canal « 3D ».

Pour procéder à la fabrication de ce module 1, il est tout d'abord réalisé un ensemble d'éléments empilés, cet ensemble étant référencé de manière générale par la référence 4 sur la figure 2.

L'empilement peut s'effectuer sur un support classique, de préférence horizontal, sur lequel il est tout d'abord placé une plaque métallique 6 en alliage, par exemple à forte conductivité thermique, tel qu'un alliage riche en cuivre, par exemple un alliage CuC1.

Sur la surface de cette plaque 6 est positionnée une autre plaque 10, usinée de manière traversante de façon à faire apparaître le canal 2. Cet usinage s'effectue de préférence par découpe laser traversante de la plaque métallique 10 de préférence fabriquée en acier inoxydable, par exemple un acier inoxydable 316L.

Dans l'exemple montré, la section de chaque tronçon de canal 2' est carrée, de côté mesurant environ 3 mm.

Ensuite, une autre plaque 6 sensiblement identique à la première, d'une épaisseur de l'ordre de 3 mm, recouvre la plaque rainurée 10. Par conséquent, les tronçons de canal 2' sont obturés vers le bas par la plaque inférieure 6 et vers le haut par la plaque supérieure 6.

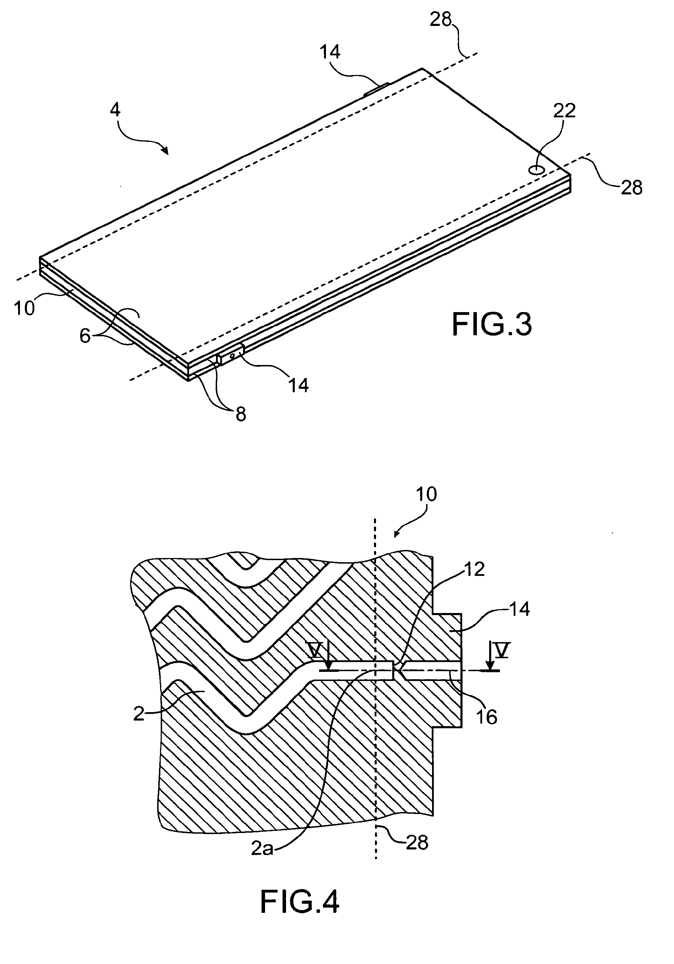

L'une des particularités de la présente invention réside dans le fait que la plaque rainurée 10 est équipée d'un ou plusieurs organes d'obturation fusibles séparant le canal 2 formant zone creuse, de l'extérieur de l'ensemble 4 montré sur la figure 3 à l'état empilé. Plus précisément, deux organes d'obturation sont prévus respectivement au niveau de deux excroissances 14 de la plaques rainurée 10, agencées en regard de l'entrée et de la sortie du canal de circulation de fluide 2.

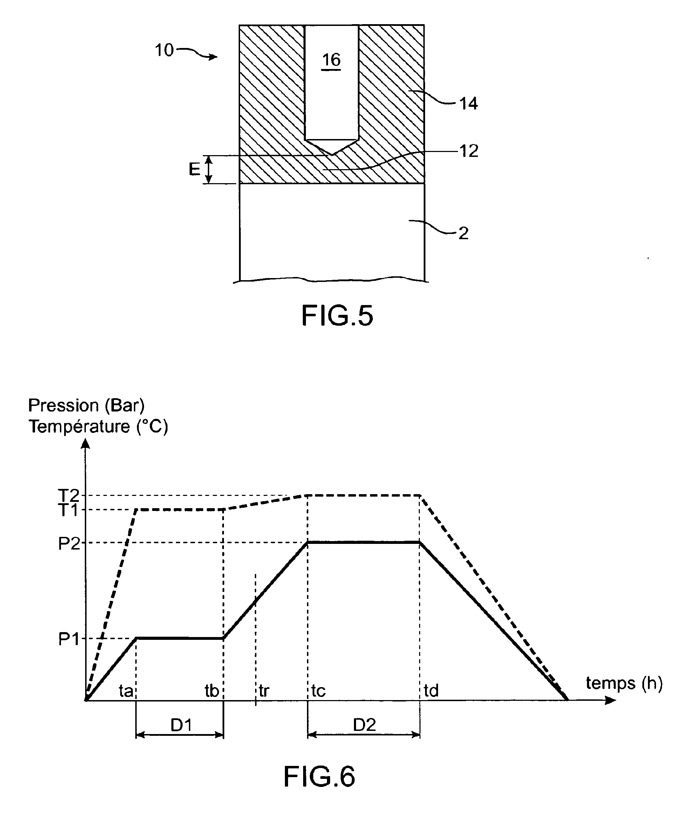

L'un des organes obturation fusibles 12 est détaillé sur les figures 4 et 5, étant entendu que l'autre est identique ou similaire, tant en termes de fonction que de structure. Sur ces figures, on peut en effet voir que l'excroissance 14 se situe au droit de l'entrée 2a du canal 2. Un perçage 16 est réalisé depuis l'extérieur de la plaque 10 à travers l'excroissance 14, en direction du canal 2. Néanmoins, ce perçage 16 ne débouche pas le canal, puisqu'un ligament de matière est conservé entre ceux-ci, en forme de membrane, afin de constituer l'organe d'obturation fusible 12. Le diamètre du perçage 16 est de l'ordre de 2 mm. Le ligament de matière restant, d'épaisseur moyenne E, de préférence déterminée par un calcul aux éléments finis en utilisant les lois de comportement mécanique à chaud du matériau et les conditions de température et de pression appliquées durant la compression, est préférentiellement comprise entre 0,3 et 0,5 mm, et encore plus préférentiellement de l'ordre de 0,4 mm. Comme cela sera détaillé ci-après, son épaisseur est fixée de manière à ce qu'il puisse remplir sa fonction consistant à assurer l'obturation du canal 2 durant une première phase de compression isostatique à chaud, puis à céder automatiquement pour autoriser ensuite l'introduction du gaz de pressurisation dans le canal durant une seconde phase de compression isostatique à chaud.

Une fois les plaques 6, 10 empilées, celles-ci sont soudées entre elles à leurs périphéries, de préférence par soudage TIG, afin de former une enveloppe étanche renfermant le canal 2 formant zone creuse. Dans ce cas précis, l'enveloppe étanche est donc constituée par les deux plaques 6, la périphérie de la plaque rainurée 10 incluant les deux organes d'obturation fusibles 12, et les soudures périphériques référencées 18 sur la figure 3.

Même si cela n'a pas été représenté, il est noté que la présence d'un seul organe fusible peut suffire. Le mode de réalisation préféré montré sur la figure 3 consistant à placer plus d'un organe fusible, en particulier un à chaque extrémité du canal, permet de sécuriser le procédé dans le cas où l'un des organes serait défectueux.

Une alternative de réalisation consiste à faire glisser l'ensemble 4 dans un conteneur comportant des ouvertures pour laisser le ou les organes d'obturation sortir de celui-ci. L'intérieur du conteneur est de forme complémentaire à celle de l'empilement ou suffisamment souple pour se déformer lors de la compression isostatique à chaud, et transmettre la pression à l'ensemble 4. Les organes fusibles faisant saillie à l'extérieur du conteneur sont alors soudés sur leur pourtour afin d'étanchéifier l'interface conteneur/organe fusible. Cette technique est notamment préférée lorsque le module désiré comprend plusieurs étages de circulation fluidique, à savoir plusieurs canaux superposés selon la direction d'empilement des plaques, obtenus par l'empilement de plaques rainurées séparées les unes des autres par des plaques pleines. Elle est aussi préférée lorsque la périphérie des plaques 6 et 10 ne peut pas être soudée, par exemple pour des raisons de compatibilité métallurgique.

La réalisation du module 1 est poursuivie en traitant l'ensemble 4, par compression isostatique à chaud. Avant la compression, un dégazage de l'empilement est effectué, par pompage via un orifice 20 pratiqué dans la paroi de l'enveloppe, ici l'une des plaques 6, comme montré sur la figure 2. Une fois le dégazage achevé, l'orifice 20 est obturé de manière étanche, par un bouchon 22, afin d'obtenir l'étanchéité du canal 2 vis-à-vis de l'extérieur de l'ensemble 4.

La compression de l'ensemble 4 s'opère dans une enceinte appropriée (non représentée), par l'application de conditions de température et de pression qui vont maintenant être détaillées en référence à la figure 6.

Comme évoqué ci-dessus, il est d'abord opéré une montée en pression et en température de manière à ce que celles-ci atteignent respectivement les valeurs P1 et T1 à un instant ta. Cette montée peut durer une heure, voire plus encore, étant entendu que le fusible reste inerte.

A partir de cet instant ta, il est réalisé une première phase de compression isostatique à chaud, durant laquelle les valeurs T1 et P1 sont respectivement maintenues à environ 1100°C, et 150 bar. Pendant cette première phase, les plaques 6, 10 commencent à se souder aux interfaces, par diffusion, c'est-à-dire à l'état solide, sans que le gaz de pressurisation ne puisse pénétrer dans canal 2 et perturber ce soudage. Le soudage observé durant cette première phase, dont la durée D1 est d'environ une heure, est suffisant pour obtenir l'étanchéité des interfaces, mais présente une résistance mécanique faible, prévue pour être consolidée par la mise en oeuvre d'une seconde phase de compression ultérieure. Ici, les interfaces précitées sont bien entendu les surfaces de contact entre les plaques 6 et 10.

La pression P1 et la température T1 appliquées durant cette première phase ne sont pas suffisantes pour entraîner la rupture des organes d'obturation 12, qui résistent en se déformant éventuellement légèrement. C'est d'ailleurs la conservation de ces organes qui garantit que le gaz de pressurisation ne vient pas perturber le soudage aux interfaces.

L'étape de compression est poursuivie par une nouvelle montée en température et en pression, respectivement à une valeur T2 de l'ordre de 1200°C, et une valeur P2 de l'ordre de 1500 bar.

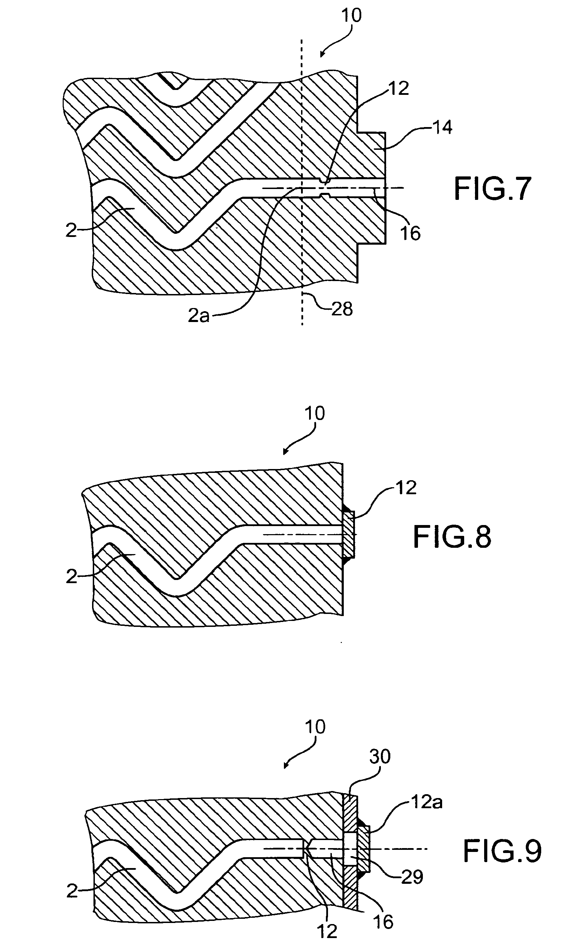

C'est au cours de cette montée en pression, dont la durée D2 peut être de l'ordre de une à deux heures, que chaque organe d'obturation fusible 12 rompt par éclatement sous l'effet de la pression appliquée, ce dernier remplissant alors sa fonction de fusible mécanique. A partir de l'instant de rupture tr, l'étanchéité de l'enveloppe est rompue, et la communication entre l'extérieur de l'ensemble 4 et le canal 2 autorisé. Le gaz de pressurisation peut ainsi pénétrer dans le canal 2 via l'orifice de jonction 24, autrement dit le passage formé au niveau de l'organe 12 initialement prévu, comme cela a été schématisé sur la figure 7. De préférence, tr est proche de tb.

Une fois la pression P2 et la température T2 atteintes, à l'instant tc, la seconde phase de compression est initiée. Elle peut durer environ deux heures, jusqu'à l'instant td correspondant au début du refroidissement. Elle permet d'appliquer une pression beaucoup importante que durant la première phase, propice à l'obtention d'une résistance mécanique forte au niveau des interfaces soudées par diffusion, sans provoquer l'écrasement du canal 2 qui peut ainsi conserver la géométrie désirée. Cela s'explique par le fait que l'intérieur de ce canal 2 est ici soumis à la même pression que celle s'appliquant sur les surfaces extérieures de l'ensemble subissant la compression.

Il est alors obtenu le module 1, dit monolithique, correspondant à un bloc massif, par exemple multi-matériaux, traversé par un canal de circulation de fluide 2.

Avant l'utilisation du module 1, chaque orifice de jonction 24 est recalibré par usinage afin de permettre une entrée/sortie satisfaisante du fluide dans le module, ou bien ce dernier est tronçonné selon les plans 28 schématisés sur les figures 3, 4 et 7, afin de faire apparaitre l'entrée 2a / la sortie 2b.

Lors de l'utilisation du module dans un système d'échangeur thermique, le fluide est par exemple amené par un collecteur d'admission (non représenté) placé à l'entrée 2a du canal 2. Le fluide circule ensuite en serpentant dans le canal 2, avant de s'échapper de ce dernier par la sortie 2b, et de pénétrer par exemple dans un collecteur d'échappement (non représenté) du système.

En référence à présent à la figure 8, il est montré une alternative de réalisation pour l'organe d'obturation fusible 12. Celui-ci ne fait plus partie intégrante de la plaque rainurée 10, mais est rapporté sur celle-ci, de préférence par soudage. Il peut soit être glissé dans un orifice prévu à cet effet, soit être rapporté sur un chant de la plaque, comme cela a été représenté sur la figure 8. Cet organe peut prendre la forme d'un fusible mécanique analogue à celui écrit ci-dessus, ou bien la forme d'un thermofusible dont le point de fusion est compris entre T1 et T2 afin de se rompre pendant la montée en température initiée à l'instant tb. Tout matériau peut être envisagé, tel que le cuivre, ou encore un mélange eutectique.

Sur la figure 9, les deux solutions précédentes sont combinées, puisqu'il est prévu une plaque rainurée 10 avec le ligament de matière 12 en regard de la sortie du canal 2 et du perçage 16, ainsi qu'un autre organe 12a obturant un orifice traversant 29 pratiqué sur un conteneur 30 logeant l'ensemble. Dans ce cas de figure, l'orifice 29 se situe dans la continuité du perçage 16. Les deux fusibles sont ici chacun prévu pour rompre durant la montée en température et en pression initiée à l'instant tb, simultanément ou successivement, de sorte qu'à l'instant tc de l'initiation de la seconde phase de compression, le canal 2 communique avec l'extérieur de l'enveloppe 30. Préférentiellement, le fusible 12a est un thermofusible, et le fusible 12 est un fusible mécanique ; dans ce cas, le thermofusible protège le fusible 12 lors de la phase à basse pression en l'isolant de la pression. Cela a pour but de diminuer le risque de rupture prématurée du fusible mécanique 12 si l'épaisseur de ligament E est plus faible que prévue.

Bien entendu, diverses modifications peuvent être apportées par l'homme du métier à l'invention qui vient d'être décrite, uniquement à titre d'exemples non limitatifs.

## Revendications

1. Procédé de fabrication d'un module (1) à zone creuse (2) par compression isostatique à chaud, comprenant :
- une étape de réalisation d'un ensemble (4) comprenant des éléments (6, 10) superposés définissant la zone creuse, ledit ensemble étant réalisé de manière à former une enveloppe étanche renfermant ladite zone creuse, comportant au moins un organe d'obturation fusible (12) séparant ladite zone creuse (2) de l'extérieur de l'ensemble ; suivie
- d'une étape de compression isostatique à chaud dudit ensemble, réalisée de manière à obtenir un soudage par diffusion de ses éléments, cette étape étant réalisée en faisant évoluer les conditions de température et de pression de sorte que celles-ci provoquent, au cours de cette étape, une rupture dudit organe d'obturation fusible (12) permettant au gaz de pressurisation de pénétrer dans ladite zone creuse (2).

2. Procédé selon la revendication 1, dans lequel lesdites conditions de température et de pression sont retenues de manière à réaliser une première phase de compression à une température T1, une pression P1, pendant une durée D1, puis à réaliser une seconde phase de compression à une température T2, une pression P2 supérieure à la pression P1, pendant une durée D2, la rupture dudit organe d'obturation fusible étant provoquée entre les première et seconde phases de compression.

3. Procédé selon la revendication 2, dans lequel ladite pression P1 est comprise entre 50 et 200 bar, et la pression P2 comprise entre 1000 et 2000 bar.

4. Procédé selon la revendication 2 ou la revendication 3, dans lequel lesdites températures T1 et T2 sont chacune comprise entre 900 et 1200°C.

5. Procédé selon l'une quelconque des revendications précédentes, dans lequel ledit organe d'obturation (12) forme un thermofusible ou un fusible mécanique.

6. Procédé selon l'une quelconque des revendications précédentes, dans lequel ledit organe d'obturation (12) fait partie intégrante de l'un desdits éléments de l'ensemble, ou bien est rapporté sur l'un de ces éléments.

7. Procédé selon l'une quelconque des revendications précédentes, dans lequel ladite zone creuse prend la forme d'un ou d'une pluralité de canaux de circulation de fluide (2).

8. Procédé selon l'une quelconque des revendications précédentes, dans lequel ledit module (1) est prévu pour équiper un système d'échangeur de chaleur

9. Procédé selon l'une quelconque des revendications précédentes, dans lequel ledit module (1) prend la forme d'une plaque.

## Patentansprüche

1. Verfahren zur Herstellung eines Moduls (1) mit einer hohlen Zone (2) durch heißisostatisches Pressen, umfassend:
- einen Schritt der Herstellung einer Anordnung (4), die überlagerte Elemente (6, 10) umfaßt, welche die hohle Zone definieren, wobei die Anordnung derart hergestellt wird, dass sie eine geschlossene Hülle bildet, die die hohle Zone einschließt, umfassend wenigstens ein Sicherungsverschlußorgan (12), welches die hohle Zone (2) vom Äußeren der Anordnung trennt; gefolgt von
- einem Schritt des heißisostatischen Pressens der Anordnung, welcher derart durchgeführt wird, dass man ein Diffusionsschweißen ihrer Elemente erzielt, wobei dieser Schritt durchgeführt wird, indem man die Temperatur- und Druckbedingungen sich derart verändern läßt, dass sie im Verlauf dieses Schritts einen Bruch des Sicherungsverschlußorgans (12) bewirken, was es dem Druckgas ermöglicht, in die hohle Zone (2) einzudringen.

2. Verfahren nach Anspruch 1, bei dem die Temperatur- und Druckbedingungen derart gewählt werden, dass eine erste Druckphase während einer Dauer D1 bei einer Temperatur T1 und einem Druck P1 realisiert wird, dann eine zweite Druckphase während einer Dauer D2 bei einer Temperatur T2 und einem Druck P2 größer als der Druck P1 realisiert wird, wobei der Bruch des Sicherungsverschlußorgans zwischen der ersten und der zweiten Druckphase bewirkt wird.

3. Verfahren nach Anspruch 2, bei dem der Druck P1 zwischen 50 und 200 bar enthalten ist, und der Druck P2 zwischen 1000 und 2000 bar enthalten ist.

4. Verfahren nach Anspruch 2 oder Anspruch 3, bei dem die Temperaturen T1 und T2 jeweils zwischen 900 und 1200°C enthalten sind.

5. Verfahren nach einem der vorhergehenden Ansprüche, bei dem das Verschlußorgan (12) eine Thermosicherung oder eine mechanische Sicherung bildet.

6. Verfahren nach einem der vorhergehenden Ansprüche, bei dem das Verschlußorgan (12) integraler Bestandteil eines der Elemente der Anordnung ist, oder aber an einem dieser Elemente angebracht ist.

7. Verfahren nach einem der vorhergehenden Ansprüche, bei dem die hohle Zone die Form eines oder mehrerer Fluidzirkulationskanäle (2) hat.

8. Verfahren nach einem der vorhergehenden Ansprüche, bei dem das Modul (1) dazu ausgelegt ist, Teil eines Wärmetauschersystems zu sein.

9. Verfahren nach einem der vorhergehenden Ansprüche, bei dem das Modul (1) die Form einer Platte aufweist.

## Claims

1. A method for manufacturing a module (1) with a hollow area (2) by hot isostatic compression, comprising:
- a step for making an assembly (4) comprising superposed elements (6, 10) defining the hollow area, said assembly being made so as to form a leakproof casing containing said hollow area, including at least one meltable obturation member (12) separating said hollow area (2) from the outside of the assembly; followed
- by a step for hot isostatic compression of said assembly, achieved so as to obtain diffusion-welding of its elements, this step being carried out by changing the temperature and pressure conditions so that the latter cause during this step a rupture of said meltable obturation member (12) allowing the pressurization gas to penetrate into said hollow area (2).

2. The method according to claim 1, wherein said temperature and pressure conditions are retained so as to achieve a first compression phase at temperature T1, a pressure P1, for a duration D1, and then to achieve a second compression phase at temperature T2, a pressure P2 greater than pressure P1, for a duration D2, the rupture of said meltable obturation member being caused between the first and second compression phases.

3. The method according to claim 2, wherein said pressure P1 is comprised between 50 and 200 bars, and pressure P2 comprised between 1,000 and 2,000 bars.

4. The method according to claim 2 or claim 3, wherein said temperatures T1 and T2 are each comprised between 900 and 1,200°C.

5. The method according to any of the preceding claims, wherein said obturation member (12) forms a thermal fuse or a mechanical fuse.

6. The method according to any of the preceding claims, wherein said obturation member (12) is an integral part of one of said elements of the assembly, or else is added onto one of these elements.

7. The method according to any of the preceding claims, wherein said hollow area assumes the form of one or a plurality of fluid circulation channels (2).

8. The method according to any of the preceding claims, wherein said module (1) is provided for fitting out a heat exchanger system.

9. The method according to any of the preceding claims, wherein said module (1) assumes the form of a plate.
